# EUROPEAN PATENT SPECIFICATION

(11) **EP 3 367 673 B1**
(45) Date of publication and mention of the grant of the patent: **23.06.2021**
(21) Application number: 17157720.8
(22) Date of filing: 23.02.2017
(51) Int. Cl.: H04N 5/60, H04N 21/41, H04N 21/422, H04N 21/4363, H04N 21/81

(54) **SYSTEM AND METHOD FOR AUDIO VOLUME CONTROL**
SYSTEM UND VERFAHREN ZUR LAUTSTÄRKENREGELUNG
SYSTÈME ET PROCÉDÉ DE COMMANDE DU VOLUME AUDIO

(43) Date of publication of application: 29.08.2018
(73) Proprietor: Vestel Elektronik Sanayi ve Ticaret A.S., 45030 Manisa (TR)
(72) Inventor: SARIARSLAN, Muhammet Kürsat, 45030 Manisa (TR)
(74) Representative: Kehl, Ascherl, Liebhoff & Ettmayr Patentanwälte Partnerschaft mbB

(56) References cited:
- EP-A2- 2 028 849
- US-A1- 2010 158 533
- US-A1- 2010 169 946
- US-A1- 2011 317 069
- Janko Roettgers: "Chromecast's secret weapon to take over your TV: HDMI-CEC | Gigaom", , 24 July 2013 (2013-07-24), XP055207227, Retrieved from the Internet: URL:https://gigaom.com/2013/07/24/chromeca st-hdmi-cec/ [retrieved on 2015-08-11]
- DVB ORGANIZATION: "TM-SM-CSS-0048r0 HDMI CEC.doc", DVB, DIGITAL VIDEO BROADCASTING, C/O EBU - 17A ANCIENNE ROUTE - CH-1218 GRAND SACONNEX, GENEVA - SWITZERLAND, 5 February 2013 (2013-02-05), XP017840158,

## Description

### TECHNICAL FIELD

The invention relates to a control method for controlling an output volume of coupled electronic devices. Further, the present invention relates to a respective control device.

### BACKGROUND

Although applicable to any system with interconnected electronic devices, the present invention will mainly be described in conjunction with interconnected consumer devices, like e.g. TV sets, amplifiers, DVD players and gaming consoles or the like.

Modern consumer electronic devices usually allow controlling the volume of the respective electronic device independently of any other devices that may be present or connected to the respective electronic device.

Such electronic devices usually come with a dedicated remote controller that allows controlling different functions of the devices, such as increasing and decreasing the volume. Just as an example, in an interconnected environment, where e.g. a satellite receiver is connected to a TV set that is connected to an amplifier, three different electronic devices with three different volume settings may be present. In addition, three different remote controllers may be provided for the three electronic devices. If a user wants to change the volume level of the TV set, the user may use the TV set's remote controller, the satellite receiver's remote controller or the amplifier's remote controller. The following problems may arise from this arrangement:
- The volume setting of one of the devices may be very low. Turning up e.g. the TV set's volume may still provide a low overall volume level.
- The volume setting of one of the devices may be very high. If another device's volume setting is increased, the overall volume increases very fast.
- The volume settings of all devices are in mid-level. If the volume setting of one of the devices is reduced, the volume level changes slow.
- Several remote controllers are provided that may be confused and are not always easy to find.

A unified remote controller may be provided that may control all electronic devices. There are one or more buttons on such remote controller to choose the device. With such a controller the user must switch between the different electronic devices. Such a controller merely reduces the number of remote controllers.

Document EP 2 028 849 A1 discloses a wireless control system for a video system. In "Chromecast's secret weapon to take over your TV: HDMI-CEC I Gigaom" by Janko Roettgers the HDMI-CEC extension of the HDMI standards is described in detail. Document D3 discloses a multimedia entertainment system of interconnected devices. Document US 2010/0158533 A1 discloses adjusting, thanks to a repeater retransmitting a signal from a remote control device, the volume for program presentation devices in a plurality of areas.

Accordingly, there is a need for an improved volume control in interconnected electronic devices.

### SUMMARY

The present invention provides a control method with the features of claim 1 and a control system with the features of claim 7.

Therefore it is provided as an embodiment useful for understanding the invention a control method for controlling an output volume of coupled electronic devices, the method comprising receiving a volume change command for one of the electronic devices that is generated by a remote controller of the respective electronic device, broadcasting the received volume change command to the other electronic devices, and adapting the volume of all coupled electronic devices by adapting the internal volume setting of the respective coupled electronic devices according to the volume change command.

It is further provided as an embodiment useful for understanding the invention a control system for controlling an output volume of coupled electronic devices. The control system comprises a number, i.e. one or more, of receivers configured to receive a volume change command for a respective one of the electronic devices that is generated by a remote controller, a broadcasting interface in each one of the electronic devices configured to broadcast the received volume change command if the respective electronic device received the volume change command to the other electronic devices or configured to receive the volume change command from the respective electronic device, and a volume control unit in each one of the coupled electronic devices configured to adapt the volume of the respective electronic device according to the received volume change command by adapting the internal volume setting of the respective coupled electronic devices.

The present invention provides an arrangement that allows commonly controlling the volume of any number of interconnected electronic devices, like e.g. consumer devices. Such devices may comprise TV sets, set-top boxes, like e.g. satellite or cable receivers, gaming consoles, multimedia players or the like.

With the present invention any one of the electronic devices may receive a volume control or volume change command that was issued by the respective remote controller. In this context the term remote controller may refer to any type of controller, e.g. an infrared based remote controller of an IP-based remote controller or the like.

In contrast to standard electronic equipment, the electronic device that receives the volume change command will not only change its internal volume setting. Instead, the electronic device will also notify the other electronic devices of the received volume change command and forward the received volume change command to the other electronic devices.

Therefore, if for example in a chain of a set-top box, a TV set and an amplifier, the amplifier receives a volume change signal, this volume change signal will be provided to the set-top box and the TV set as well and all three devices may change their internal volume setting accordingly.

Therefore, with the present invention uniform volume control is possible even if different electronic devices are coupled and possess individual internal volume settings.

Further embodiments useful for understanding the invention are subject of the following description, referring to the drawings.

In an embodiment, the volume change command may be received directly in a first one of the electronic devices and the volume change command may be broadcast to the other electronic devices by the first electronic device.

If the electronic devices may receive and broadcast the volume change command, no further hardware or devices are needed to perform the volume control in all the electronic devices.

It is understood, that a signal chain may be provided, where a received volume change command is received by a first electronic device and sent by the first electronic device to a second electronic device. The second electronic device may send the volume change control to at least one third electronic device. This signal chain allows providing the volume change command to all electronic devices, even if they are not directly coupled to each other.

This is especially useful in arrangements where a receiver comprises a plurality of connections, e.g. HDMI connections, to a plurality of electronic devices. The receiver in such an arrangement may be a kind of central hub. If now one of the connected electronic devices receives the volume change command, the electronic device may send the volume change command to the receiver and the receiver may send the volume change command to all electronic devices that are connected to the receiver.

In an embodiment, the volume change command may be received by a central server and the volume change command may be broadcast to the electronic devices from the server.

In this arrangement a dedicated remote controller may be provided for the central server or the central server may be implemented by any one of the electronic devices. In one example the server may be implemented by an electronic device that is connected to a plurality of other electronic devices. Such a device may be a receiver or a TV set with a plurality of connections to other electronic devices. If the server is one of the electronic devices no dedicated remote controller is needed.

The volume change command may be broadcast from the server directly to all electronic devices. In addition, electronic devices may also forward the volume change command from the server to other electronic devices that have no direct connection to the server.

In another embodiment, broadcasting may be performed via an analogue signal and/or via a digital signal and/or via a PWM signal.

The volume change command may e.g. comprise a voltage or current value, a digital volume value, e.g. in dB or as a percentage, especially between 0% and 100%. A PWM or any other adequate type of signaling may also be used.

Electronic devices may support more than one type of signal for transmission of the volume change command. Electronic devices, like e.g. receivers or TV sets with connections to a plurality of other electronic devices may e.g. support different types of signals to communicate the volume change command to different electronic devices with different capabilities.

Electronic devices that support more than one type of signal may also support translation of the volume change command from one type to another.

In an embodiment, broadcasting may be performed via a wired signal line and/or via a wireless communication interface and/or via an optical communication interface.

In fact, any type of interface may be used to interconnect the electronic devices. In addition, different types of interfaces may be used to interconnect a plurality of electronic devices.

Electronic devices, like e.g. receivers or TV sets with connections to a plurality of other electronic devices may e.g. comprise a plurality of different interfaces to communicate the volume change command to a plurality of different electronic devices with different capabilities.

The wired signal line may e.g. be used to transport analogue or digital data signals. Such lines may e.g. be data lines in a SCART connector, data lines in a HDMI connector, like e.g. additional Ethernet lines in a HDMI connector or the HDMI data lines that may additionally be used to transport the volume change command from one electronic device to another. Further, the wired signal lines may be provided by dedicated interfaces, like e.g. serial interfaces, like RS-232 or the like, Ethernet interfaces or the like.

Wireless interfaces may e.g. comprise WLAN, WIFI, Bluetooth, ZigBee or the like. The advantage is that with wireless interfaces more than one electronic device may be reached by a broadcast message containing the volume change command and the number of messages to broadcast the volume change command to all electronic devices may be reduced.

In an embodiment, broadcasting may comprise broadcasting to the single electronic devices adapted volume change commands that command the respective electronic device to set an optimized volume value. The optimized volume values may be provided such that the single electronic devices are operated in their optimal volume range for the volume value of the volume change command.

Every device may have a volume range that is optimal e.g. in terms of power efficiency, distortion factor and the like. Therefore, not all electronic devices need to be set to the same volume level. Instead the electronic devices may be set such that as a whole the signal chain, e.g. from set-top box to TV set and to amplifier, provides the desired volume. However, the single devices may be set to different volume levels according to their characteristics such that the respective device is operated e.g. at its optimum distortion value or with optimum efficiency.

In an embodiment, when a device change command is received at one of the electronic devices that is connected to a plurality of electronic devices, the newly selected electronic device indicated by the device change command may automatically be provided with a volume change command according to the last received volume change command.

Some electronic devices, like e.g. receivers, may be connected to a plurality of different electronic devices, like e.g. set-top boxes, consoles, DVD/Blu-ray players, multimedia boxes or the like, at the same time. A receiver may e.g. be set to display the image of a set-top box and a volume change command may be issued by a user to set a predefined volume. The user may then however start up a console or another device and switch the receiver to display the image of that device.

Since this new electronic device may not have received the last volume change control, it may have an arbitrary volume setting. Therefore, by automatically providing the last received volume change command or an adapted volume change command based on the last received volume change command, the new device may be set to the correct volume level and a volume increase or decrease may be prevented when switching between electronic devices.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments useful for understanding the invention embodiments which are specified in the schematic figures of the drawings, in which:
Fig. 1 shows a flow diagram of an embodiment of a method useful for understanding the invention;
Fig. 2 shows another flow diagram of another embodiment of a method useful for understanding the invention;
Fig. 3 shows a block diagram of an embodiment of a control system useful for understanding the invention; and
Fig. 4 shows a block diagram of another embodiment of a control system useful for understanding the invention.

In the figures like reference signs denote like elements unless stated otherwise.

### DETAILED DESCRIPTION OF THE DRAWINGS

For sake of clarity in the description of the method based figures the reference signs of the elements of the apparatus based figures will be used.

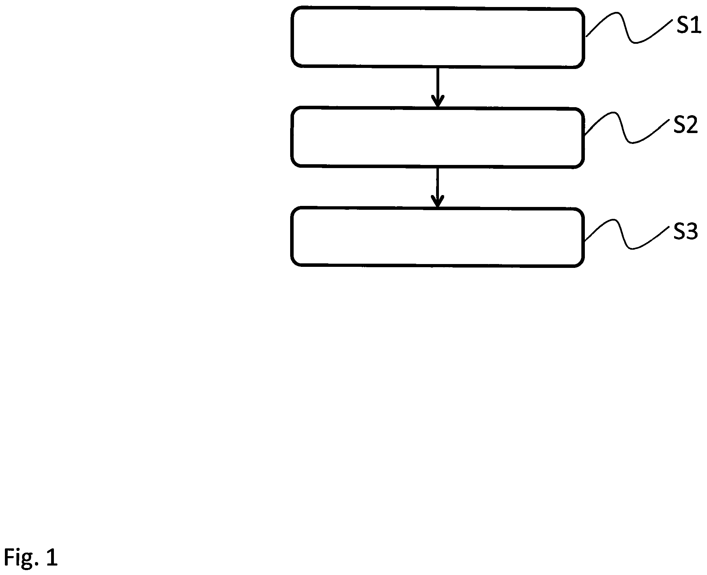

Fig. 1 shows a flow diagram of an embodiment of a method for controlling an output volume of coupled electronic devices 101, 102, 201, 202, 212, 213.

As already explained above, without a coordinated volume control changing the volume of one electronic device 101, 102, 201, 202, 212, 213 in a coupled plurality of electronic devices 101, 102, 201, 202, 212, 213, may not yield the expected result.

Therefore, the method useful for understanding the present invention comprises the step of receiving S1 a volume change command 105, 205 for one of the electronic devices 101, 102, 201, 202, 212, 213 that is generated by a remote controller 106, 206, e.g. a remote controller 106, 206 of the respective electronic device 101, 102, 201, 202, 212, 213.

The received volume change command 105, 205 is then broadcast S2 to the other electronic devices 101, 102, 201, 202, 212, 213. Broadcasting S2 may e.g. be performed via an analogue signal and/or via a digital signal and/or via a PWM signal. For the transmission of the signal a wired signal line and/or a wireless communication interface and/or an optical communication interface may be used. Possible wired interfaces may e.g. be HDMI, SCART, RS-232, or the like. Wireless interfaces may comprise WLAN, WIFI, Bluetooth, ZigBee, or any other type of wireless interface. The interfaces may also be light based and e.g. use fibers or visible light communication, like e.g. LIFI.

Finally, all electronic devices 101, 102, 201, 202, 212, 213 adapt S3 their volume according to the volume change command 105, 205.

If all electronic devices 101, 102, 201, 202, 212, 213 perform the same volume adjustment, controlling the volume in an interconnected arrangement of electronic devices 101, 102, 201, 202, 212, 213 will perform as expected.

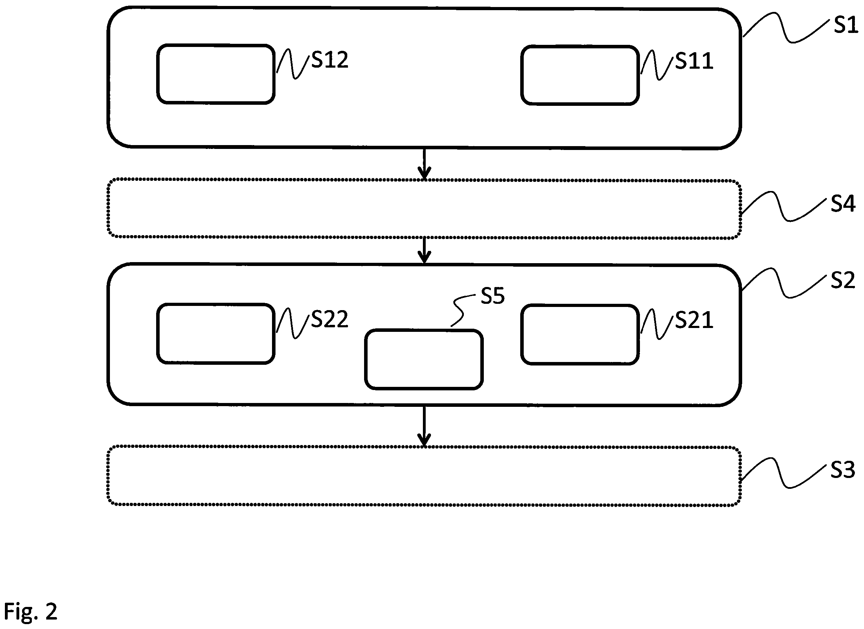

Fig. 2 shows a flow diagram of another control method for controlling an output volume of coupled electronic devices 101, 102, 201, 202, 212, 213. The method of Fig. 2 is based on the method of Fig. 1.

Receiving S1 comprises either receiving S11 the volume change command 105, 205 directly in a first one of the electronic devices 101, 102, 201, 202, 212, 213. In this case broadcasting S2 comprises broadcasting S21 the volume change command 105, 205 to the other electronic devices 101, 102, 201, 202, 212, 213 by the first electronic device 101, 102, 201, 202, 212, 213.

As an alternative way of receiving the volume change command 105, 205, receiving S1 further comprises receiving S21 the volume change command 105, 205 by a central server 216. In this case broadcasting S2 comprises broadcasting S22 the volume change command 105, 205 to the electronic devices 101, 102, 201, 202, 212, 213 from the central server 216.

Prior to broadcasting S2, the method comprises calculating S4 adapted volume change commands 220 for the single electronic devices 101, 102, 201, 202, 212, 213 that command the respective electronic devices 101, 102, 201, 202, 212, 213 to set an optimized volume value. The optimized volume values are provided such that the single electronic devices 101, 102, 201, 202, 212, 213 are operated in their optimal volume range for the volume value of the volume change command 105, 205. Optimal may comprise optimal in regards to efficiency or distortions.

Finally, as an optional step when a device change command is received at one of the electronic devices 101, 102, 201, 202, 212, 213 that is connected to a plurality of electronic devices 101, 102, 201, 202, 212, 213, e.g. at a receiver, the newly selected electronic device 101, 102, 201, 202, 212, 213 indicated by the device change command is automatically provided S5 with a volume change command 105, 205 according to the last received volume change command 105, 205.

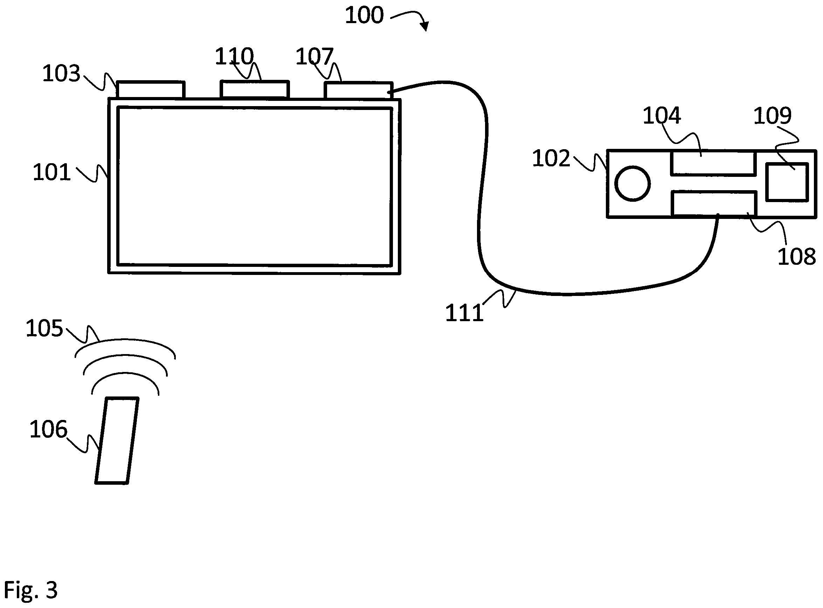

Fig. 3 shows a block diagram of an exemplary control system 100. Just as an example, the control system 100 comprises two electronic devices, a TV set 101, and a receiver 102. It is understood, that the control system 100 may comprise any other number and type of electronic devices.

The TV set 101 and the receiver 102 each comprise a receiver 103, 104 for receiving volume change commands 105 via a remote controller 106 of the respective device. In Fig. 1 only the remote controller 106 of the TV set 101 is shown. It is understood, that every electronic device 101, 102 may have its own remote controller 106 or switchable remote controller may be used to control the different electronic devices 101, 102.

Further, the TV set 101 and the receiver 102 each comprise a broadcasting interface 107, 108, which serve to couple the TV set 101 with the receiver 102. Coupling in this context refers to providing means to exchange volume change commands 105. It is understood, the broadcasting interfaces 107, 108 may be dedicated interfaces or any other type of general purpose interface, like e.g. a network interface.

Finally, the TV set 101 and the receiver 102 both comprise a volume control unit 109, 110. The volume control unit 109 of the TV set 101 adapts the volume setting of the TV set 101 according to the volume change commands 105. The volume control unit 110 of the receiver 102 adjusts the volume setting of the receiver 102 according to the volume change commands 105.

With the arrangement of the controls system 100 any volume change commands 105 received either by the TV set 101 or the receiver 102 will be forwarded or broadcast by the receiving device 101, 102 to the other device 102, 101. Therefore, both devices, the TV set 101 and the receiver 102, will adjust their volume settings in parallel.

As indicated above, although only two electronic devices 101, 102 are shown, the volume change commands 105 would also be broadcast to any other electronic devices that might be present in the control system 100.

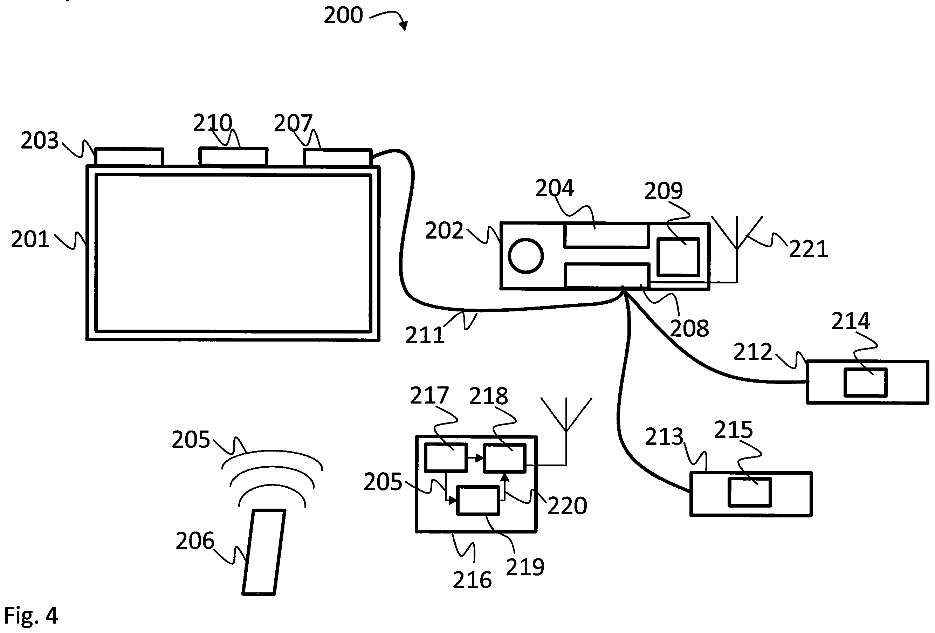

Fig. 4 shows a block diagram of a control system 200 that is based on the control system 100.

In the control system 200 a TV set 201 is connected to a receiver 202 via an HDMI interface 207, 208. This HDMI interface 207, 208 may be used to transmit image data as well as any volume change commands 205.

Further, two electronic devices 212, 213 are connected via an HDMI interface (not explicitly shown) to the receiver 202. However, the HDMI interface is not used to provide the volume change commands 205 to the electronic devices 212, 213. Instead the broadcasting interface 208 further includes a wireless interface 221 that is used to provide the volume change commands 205 to the electronic devices 212, 213. This wireless interface 221 may e.g. be a WIFI, WLAN, Bluetooth interface or the like. The wireless interface 221 may also be a visible light interface.

It is understood, that although not shown in detail, any one of the electronic devices 201, 202, 213, 214 may receive and broadcast the volume change commands 205, as already explained in conjunction with Fig. 3. Further, the receiver 202 may convert any volume change commands 205 from the wireless interface 221 to the HDMI interface 208 or vice versa.

Finally, in the control system 200 a central server 216 is provided. The central server 216 may also receive volume change commands 205 via receiver 217. The central server 216 may then forward or broadcast the received volume change commands 205 to all electronic devices 201, 202, 212, 213.

Prior to broadcasting the volume change commands 205 to the electronic devices 201, 202, 212, 213, the control unit 219 calculates adapted volume change commands 220 for the single electronic devices 201, 202, 212, 213 and provides the adapted volume change commands 220 to the electronic devices 201, 202, 212, 213.

The adapted volume change commands 220 commands the respective electronic devices 201, 202, 212, 213 to set optimized volume values. Such optimized volume values are provided such that the single electronic devices 201, 202, 212, 213 are operated in their optimal volume range for the volume value of the volume change command 205.

It is understood that the functionality of the central server 216 may also be included in any one of the other electronic devices 201, 202, 212, 213, especially in the receiver 216.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims. Generally, this application is intended to cover any adaptations or variations of the specific embodiments discussed herein, the scope of the present invention being defined by the claims.

### List of reference signs

- 100, 200: control system
- 101, 102, 201, 202, 212, 213: electronic devices
- 103, 104, 203, 204, 217: receivers
- 105, 205: volume change command
- 106, 206: remote controller
- 107, 108, 207, 208, 214, 215, 218: broadcasting interface
- 109, 110, 209, 210: volume control unit
- 111, 211: cable

- 216: central server

- 219: control unit
- 220: adapted volume change commands
- 221: wireless interface

- S1, S11, S12: method steps
- S2, S21, S22: method steps
- S3, S4, S5: method steps

## Claims

1. Control method for controlling an output volume of coupled electronic devices (101, 102, 201, 202, 212, 213), the method comprising:
receiving (S1) a volume change command (105, 205) for one of the electronic devices (101, 102, 201, 202, 212, 213) that is generated by a remote controller (106, 206) of the respective electronic device (101, 102, 201, 202, 212, 213),
calculating (S4) adapted volume change commands (220) for the single electronic devices (101, 102, 201, 202, 212, 213) and broadcasting (S21, S22) to the single electronic devices (101, 102, 201, 202, 212, 213) adapted volume change commands (220) that command the respective electronic device (101, 102, 201, 202, 212, 213) to set an optimized volume value, wherein the optimized volume values are provided such that the single electronic devices (101, 102, 201, 202, 212, 213) are operated in their optimal volume range regarding optimum distortion value or optimum efficiency for the volume value of the volume change command (105, 205),
adapting (S3) the volume of all coupled electronic devices (101, 102, 201, 202, 212, 213) by adapting the internal volume setting of the respective coupled electronic devices (101, 102, 201, 202, 212, 213) according to the respective adapted volume change command (105, 205) .

2. Control method according to claim 1, wherein the volume change command (105, 205) is received directly (S11) in a first one of the electronic devices (101, 102, 201, 202, 212, 213) and wherein the volume change command (105, 205) is broadcast (S21) to the other electronic devices (101, 102, 201, 202, 212, 213) by the first electronic device (101, 102, 201, 202, 212, 213).

3. Control method according to claim 1 wherein the volume change command (105, 205) is received (S12) by a central server (216) and wherein the volume change command (105, 205) is broadcast (S22) to the electronic devices (101, 102, 201, 202, 212, 213) from the central server (216).

4. Control method according to any one of the preceding claims, wherein broadcasting (S2) is performed via an analogue signal and/or via a digital signal and/or via a PWM signal.

5. Control method according to any one of the preceding claims, wherein broadcasting (S2) is performed via a wired signal line and/or via a wireless communication interface and/or via an optical communication interface.

6. Control method according to any one of the preceding claims, wherein when a device change command is received at one of the electronic devices (101, 102, 201, 202, 212, 213) that is connected to a plurality of electronic devices (101, 102, 201, 202, 212, 213), the newly selected electronic device (101, 102, 201, 202, 212, 213) indicated by the device change command is automatically provided (S5) with a volume change command (105, 205) according to the last received volume change command (105, 205).

7. Control system (100, 200) for controlling an output volume of coupled electronic devices (101, 102, 201, 202, 212, 213), the control system (100, 200) comprising:
a number of receivers (103, 104, 203, 204, 217) configured to receive a volume change command (105, 205) for a respective one of the electronic devices (101, 102, 201, 202, 212, 213) that is generated by a remote controller (106, 206),
a broadcasting interface (107, 108, 207, 208, 214, 215, 218) in each one of the electronic devices (101, 102, 201, 202, 212, 213) configured to broadcast the received volume change command (105, 205) if the respective electronic device (101, 102, 201, 202, 212, 213) received the volume change command (105, 205) to the other electronic devices (101, 102, 201, 202, 212, 213) or configured to receive the volume change command (105, 205) from the respective electronic device (101, 102, 201, 202, 212, 213),
a control unit (219) configured to calculate for the single electronic devices (101, 102, 201, 202, 212, 213) adapted volume change commands (220) that command the respective electronic devices (101, 102, 201, 202, 212, 213) to set optimized volume values, wherein the optimized volume values are provided such that the single electronic devices (101, 102, 201, 202, 212, 213) are operated in their optimal volume range regarding optimum distortion value or optimum efficiency for the volume value of the volume change command (105, 205), and wherein the broadcasting interfaces (107, 108, 207, 208, 214, 215, 218) are configured to broadcast the adapted volume change commands (220) to the single electronic devices (101, 102, 201, 202, 212, 213), and
a volume control unit (109, 110, 209, 210) in each one of the coupled electronic devices (101, 102, 201, 202, 212, 213) configured to adapt the volume of the respective electronic device (101, 102, 201, 202, 212, 213) according to the received adapted volume change command (105, 205) by adapting the internal volume setting of the respective coupled electronic device (101, 102, 201, 202, 212, 213).

8. Control system (100, 200) according to claim 7, wherein one of the receivers (103, 104, 203, 204, 217) is provided in a first one of the electronic devices (101, 102, 201, 202, 212, 213) and is configured to receive the volume change command (105, 205) directly from a remote controller (106, 206) of the first electronic device (101, 102, 201, 202, 212, 213) and wherein one of the broadcasting interfaces (107, 108, 207, 208, 214, 215, 218) is provided in the first electronic device (101, 102, 201, 202, 212, 213) and is configured to broadcast the respective volume change command (105, 205) to the other electronic devices (101, 102, 201, 202, 212, 213).

9. Control system (100, 200) according to claim 7, comprising a central server (216), wherein one of the receivers (103, 104, 203, 204, 217) and one of the broadcasting interfaces (107, 108, 207, 208, 214, 215, 218) are provided in a central server (216) and wherein the receiver (103, 104, 203, 204, 217) in the central server (216) is configured to receive the volume change command (105, 205) and the broadcasting interface (107, 108, 207, 208, 214, 215, 218) in the central server (216) is configured to broadcast the volume change command (105, 205) to the electronic devices (101, 102, 201, 202, 212, 213).

10. Control system (100, 200) according to any one of the preceding claims 7 to 9, wherein the broadcasting interfaces (107, 108, 207, 208, 214, 215, 218) are configured to provide and/or receive an analogue signal and/or a digital signal and/or a PWM signal.

11. Control system (100, 200) according to any one of the preceding claims 7 to 10, wherein the broadcasting interfaces (107, 108, 207, 208, 214, 215, 218) comprise a wired signal interface and/or a wireless communication interface and/or an optical communication interface.

12. Control system (100, 200) according to any one of the preceding claims 7 to 11, wherein when a device change command is received at one of the electronic devices (101, 102, 201, 202, 212, 213) that is connected to a plurality of electronic devices (101, 102, 201, 202, 212, 213), the broadcasting interface (107, 108, 207, 208, 214, 215, 218) of the respective electronic device (101, 102, 201, 202, 212, 213) is configured to automatically provide the newly selected electronic device (101, 102, 201, 202, 212, 213) indicated by the device change command with a volume change command (105, 205) according to the last received volume change command (105, 205).

## Patentansprüche

1. Steuerungsverfahren zur Steuerung einer Ausgangslautstärke von gekoppelten elektronischen Vorrichtungen (101, 102, 201, 202, 212, 213), wobei das Verfahren aufweist:
Empfangen (S1) eines Lautstärkeänderungsbefehls (105, 205) für eine der elektronischen Vorrichtungen (101, 102, 201, 202, 212, 213), der von einer Fernsteuerung (106, 206) der jeweiligen elektronischen Vorrichtung (101, 102, 201, 202, 212, 213) erzeugt wird,
Berechnen (S4) von angepassten Lautstärkeänderungsbefehlen (220) für die einzelnen elektronischen Vorrichtungen (101, 102, 201, 202, 212, 213) und Senden (S21, S22) von angepassten Lautstärkeänderungsbefehlen (220), die der jeweiligen elektronischen Vorrichtung (101, 102, 201, 202, 212, 213) befehlen, einen optimierten Lautstärkewert einzustellen, an die einzelnen elektronischen Vorrichtungen (101, 102, 201, 202, 212, 213), 213) befehlen, einen optimierten Lautstärkewert einzustellen, wobei die optimierten Lautstärkewerte so bereitgestellt werden, dass die einzelnen elektronischen Vorrichtungen (101, 102, 201, 202, 212, 213) in ihrem optimalen Lautstärkebereich hinsichtlich optimalem Verzerrungswert oder optimalem Wirkungsgrad für den Lautstärkewert des Lautstärkeänderungsbefehls (105, 205) betrieben werden,
Anpassen (S3) der Lautstärke aller gekoppelten elektronischen Vorrichtungen (101, 102, 201, 202, 212, 213) durch Anpassen der internen Lautstärkeeinstellung der jeweiligen gekoppelten elektronischen Vorrichtungen (101, 102, 201, 202, 212, 213) gemäß dem jeweils angepassten Lautstärkeänderungsbefehl (105, 205).

2. Verfahren gemäß Anspruch 1, wobei der Lautstärkeänderungsbefehl (105, 205) direkt (S11) in einer ersten der elektronischen Vorrichtungen (101, 102, 201, 202, 212, 213) empfangen wird und wobei der Lautstärkeänderungsbefehl (105, 205) von der ersten elektronischen Vorrichtung (101, 102, 201, 202, 212, 213) an die anderen elektronischen Vorrichtungen (101, 102, 201, 202, 212, 213) gesendet wird (S21).

3. Steuerungsverfahren gemäß Anspruch 1, wobei der Lautstärkeänderungsbefehl (105, 205) von einem zentralen Server (216) empfangen wird (S12) und wobei der Lautstärkeänderungsbefehl (105, 205) von dem zentralen Server (216) an die elektronischen Vorrichtungen (101, 102, 201, 202, 212, 213) gesendet wird (S22).

4. Steuerungsverfahren gemäß einem der vorhergehenden Ansprüche, wobei das Aussenden (S2) über ein analoges Signal und/oder über ein digitales Signal und/oder über ein PWM-Signal erfolgt.

5. Steuerungsverfahren gemäß einem der vorangehenden Ansprüche, wobei das Aussenden (S2) über eine drahtgebundene Signalleitung und/oder über eine drahtlose Kommunikationsschnittstelle und/oder über eine optische Kommunikationsschnittstelle erfolgt.

6. Steuerungsverfahren nach einem der vorhergehenden Ansprüche, wobei bei Empfang eines Vorrichtungswechselbefehls an einer der elektronischen Vorrichtungen (101, 102, 201, 202, 212, 213), die mit mehreren elektronischen Vorrichtungen (101, 102, 201, 202, 212, 213) verbunden ist, die neu ausgewählte elektronische Vorrichtung (101, 102, 201, 202, 212, 213), die durch den Gerätewechselbefehl angezeigt wird, automatisch mit einem Lautstärkeänderungsbefehl (105, 205) gemäß dem zuletzt empfangenen Lautstärkeänderungsbefehl (105, 205) versorgt wird (S5).

7. Steuersystem (100, 200) zur Steuerung einer Ausgangslautstärke von gekoppelten elektronischen Vorrichtungen (101, 102, 201, 202, 212, 213), wobei das Steuersystem (100, 200) aufweist:
eine Anzahl von Empfängern (103, 104, 203, 204, 217), die konfiguriert sind, um einen Lautstärkeänderungsbefehl (105, 205) für eine jeweilige der elektronischen Vorrichtungen (101, 102, 201, 202, 212, 213) zu empfangen, der von einer Fernsteuerung (106, 206) erzeugt wird
eine Aussendeschnittstelle (107, 108, 207, 208, 214, 215, 218) in jeder der elektronischen Vorrichtungen (101, 102, 201, 202, 212, 213), die konfiguriert ist, um den empfangenen Lautstärkeänderungsbefehl (105, 205) an die anderen elektronischen Vorrichtungen (101, 102, 201, 202, 212, 213) auszusenden, wenn die jeweilige elektronische Vorrichtung (101, 102, 201, 202, 212, 213) den Lautstärkeänderungsbefehl (105, 205) empfängt, oder konfiguriert ist, um den Lautstärkeänderungsbefehl (105, 205) von der jeweiligen elektronischen Vorrichtung (101, 102, 201, 202, 212, 213) zu empfangen,
eine Steuereinheit (219), die konfiguriert ist, für die einzelnen elektronischen Vorrichtungen (101, 102, 201, 202, 212, 213) angepasste Lautstärkeänderungsbefehle (220) zu berechnen, die den jeweiligen elektronischen Vorrichtungen (101, 102, 201, 202, 212, 213) befehlen, optimierte Lautstärkewerte einzustellen, wobei die optimierten Lautstärkewerte so bereitgestellt werden, dass die einzelnen elektronischen Vorrichtungen (101, 102, 201, 202, 212, 213) in ihrem optimalen Lautstärkebereich hinsichtlich eines optimalen Verzerrungswertes oder eines optimalen Wirkungsgrades für den Lautstärkewert des Lautstärkeänderungsbefehls (105, 205) betrieben werden, und wobei die Sende-Schnittstellen (107, 108, 207, 208, 214, 215, 218) dazu eingerichtet sind, die angepassten Lautstärkeänderungsbefehle (220) an die einzelnen elektronischen Vorrichtungen (101, 102, 201, 202, 212, 213) zu senden, und
eine Lautstärkesteuereinheit (109, 110, 209, 210) in jeder der gekoppelten elektronischen Vorrichtungen (101, 102, 201, 202, 212, 213), die konfiguriert ist, um die Lautstärke der jeweiligen elektronischen Vorrichtung (101, 102, 201, 202, 212, 213) gemäß dem empfangenen angepassten Lautstärkeänderungsbefehl (105, 205) durch Anpassen der internen Lautstärkeeinstellung der jeweiligen gekoppelten elektronischen Vorrichtung (101, 102, 201, 202, 212, 213) anzupassen.

8. Steuerungssystem (100, 200) gemäß Anspruch 7, wobei einem der Empfänger (103, 104, 203, 204, 217) in einer ersten der elektronischen Vorrichtungen (101, 102, 201, 202, 212, 213) bereitgestellt ist und konfiguriert ist, um den Lautstärkeänderungsbefehl (105, 205) direkt von einer Fernsteuerung (106, 206) der ersten elektronischen Vorrichtung (101, 102, 201, 202, 212, 213) zu empfangen, und wobei eine der Aussendeschnittstellen (107, 108, 207, 208, 214, 215, 218) in der ersten elektronischen Vorrichtung (101, 102, 201, 202, 212, 213) bereitgestellt ist und konfiguriert ist, den jeweiligen Lautstärkeänderungsbefehl (105, 205) an die anderen elektronischen Vorrichtungen (101, 102, 201, 202, 212, 213) zu senden.

9. Steuerungssystem (100, 200) gemäß Anspruch 7, das einen zentralen Server (216) aufweist, wobei einer der Empfänger (103, 104, 203, 204, 217) und eine der Aussendeschnittstellen (107, 108, 207, 208, 214, 215, 218) in einem zentralen Server (216) bereitgestellt sind und wobei die Empfängern (103, 104, 203, 204, 217) in dem zentralen Server (216) konfiguriert ist, um den Lautstärkeänderungsbefehl (105, 205) zu empfangen, und die Rundfunkschnittstelle (107, 108, 207, 208, 214, 215, 218) in dem zentralen Server (216) konfiguriert ist, um den Lautstärkeänderungsbefehl (105, 205) an die elektronischen Vorrichtungen (101, 102, 201, 202, 212, 213) zu senden.

10. Steuerungssystem (100, 200) gemäß einem der vorhergehenden Ansprüche 7 bis 9, wobei die Aussendesschnittstellen (107, 108, 207, 208, 214, 215, 218) konfiguriert sind, um ein analoges Signal und/oder ein digitales Signal und/oder ein PWM-Signal bereitzustellen und/oder zu empfangen.

11. Steuerungssystem (100, 200) gemäß einem der vorangehenden Ansprüche 7 bis 10, wobei die Aussendeschnittstellen (107, 108, 207, 208, 214, 215, 218) eine drahtgebundene Signalschnittstelle und/oder eine drahtlose Kommunikationsschnittstelle und/oder eine optische Kommunikationsschnittstelle aufweisen.

12. Steuerungssystem (100, 200) gemäß einem der vorhergehenden Ansprüche 7 bis 11, wobei bei Empfang eines Vorrichtungswechselbefehls an einer der elektronischen Vorrichtungen (101, 102, 201, 202, 212, 213), die mit einer Mehrzahl von elektronischen Vorrichtungen (101, 102, 201, 202, 212, 213) verbunden ist, die Broadcasting-Schnittstelle (107, 108, 207, 208, 214, 215, 218) der jeweiligen elektronischen Vorrichtung (101, 102, 201, 202, 212, 213) so konfiguriert ist, dass sie die neu ausgewählte elektronische Vorrichtung (101, 102, 201, 202, 212, 213), die durch den Vorrichtungsänderungsbefehl angezeigt wird, automatisch mit einem Lautstärkeänderungsbefehl (105, 205) gemäß dem zuletzt empfangenen Lautstärkeänderungsbefehl (105, 205) versorgt.

## Revendications

1. Méthode de commande pour commander un volume de sortie de dispositifs électroniques couplés (101, 102, 201, 202, 212, 213), la méthode comprenant:
recevoir (S1) une commande de changement de volume (105, 205) pour l'un des dispositifs électroniques (101, 102, 201, 202, 212, 213) qui est générée par un contrôleur à distance (106, 206) du dispositif électronique respectif (101, 102, 201, 202, 212, 213),
calculer (S4) des commandes de changement de volume adaptées (220) pour les dispositifs électroniques uniques (101, 102, 201, 202, 212, 213) et diffuser (S21, S22) aux dispositifs électroniques uniques (101, 102, 201, 202, 212, 213) des commandes de changement de volume adaptées (220) qui commandent le dispositif électronique respectif (101, 102, 201, 202, 212, 213) de définir une valeur de volume optimisée, dans lequel les valeurs de volume optimisées sont fournies de telle sorte que les dispositifs électroniques uniques (101, 102, 201, 202, 212, 213) sont exploités dans leur plage de volume optimale concernant la valeur de distorsion optimale ou l'efficacité optimale pour la valeur de volume de la commande de changement de volume (105, 205),
adapter (S3) le volume de tous les dispositifs électroniques couplés (101, 102, 201, 202, 212, 213) en adaptant le réglage de volume interne des dispositifs électroniques couplés respectifs (101, 102, 201, 202, 212, 213) selon la commande de changement de volume adaptée respective (105, 205).

2. Méthode de commande selon la revendication 1, dans laquelle la commande de changement de volume (105, 205) est reçue directement (S11) dans un premier des dispositifs électroniques (101, 102, 201, 202, 212, 213) et dans laquelle la commande de changement de volume (105, 205) est diffusée (S21) aux autres dispositifs électroniques (101, 102, 201, 202, 212, 213) par le premier dispositif électronique (101, 102, 201, 202, 212, 213).

3. Méthode de contrôle selon la revendication 1, dans laquelle la commande de changement de volume (105, 205) est reçue (S12) par un serveur central (216) et dans laquelle la commande de changement de volume (105, 205) est diffusée (S22) aux dispositifs électroniques (101, 102, 201, 202, 212, 213) depuis le serveur central (216).

4. Méthode de commande selon l'une quelconque des revendications précédentes, dans laquelle la diffusion (S2) est réalisée via un signal analogique et/ou via un signal numérique et/ou via un signal PWM.

5. Méthode de commande selon l'une quelconque des revendications précédentes, dans laquelle la diffusion (S2) est réalisée via une ligne de signal filaire et/ou via une interface de communication sans fil et/ou via une interface de communication optique.

6. Méthode de commande selon l'une quelconque des revendications précédentes, dans laquelle lorsqu'une commande de changement de dispositif est reçue au niveau de l'un des dispositifs électroniques (101, 102, 201, 202, 212, 213) qui est connecté à une pluralité de dispositifs électroniques (101, 102, 201, 202, 212, 213), le dispositif électronique nouvellement sélectionné (101, 102, 201, 202, 212, 213) indiqué par la commande de changement de dispositif reçoit automatiquement (S5) une commande de changement de volume (105, 205) selon la dernière commande de changement de volume reçue (105, 205).

7. Système de commande (100, 200) pour commander un volume de sortie de dispositifs électroniques couplés (101, 102, 201, 202, 212, 213), le système de commande (100, 200) comprenant :
un certain nombre de récepteurs (103, 104, 203, 204, 217) configurés pour recevoir une commande de changement de volume (105, 205) pour l'un respectif des dispositifs électroniques (101, 102, 201, 202, 212, 213) qui est générée par un contrôleur à distance (106, 206),
une interface de diffusion (107, 108, 207, 208, 214, 215, 218) dans chacun des dispositifs électroniques (101, 102, 201, 202, 212, 213) configurée pour diffuser la commande de changement de volume reçue (105, 205) si le dispositif électronique respectif (101, 102, 201, 202, 212, 213) a reçu la commande de changement de volume (105, 205) aux autres dispositifs électroniques (101, 102, 201, 202, 212, 213) ou configuré pour recevoir la commande de changement de volume (105, 205) du dispositif électronique respectif (101, 102, 201, 202, 212, 213),
une unité de commande (219) configurée pour calculer pour les dispositifs électroniques uniques (101, 102, 201, 202, 212, 213) des commandes de changement de volume adaptées (220) qui commandent aux dispositifs électroniques respectifs (101, 102, 201, 202, 212, 213) de définir des valeurs de volume optimisées, dans laquelle les valeurs de volume optimisées sont fournies de telle sorte que les dispositifs électroniques uniques (101, 102, 201, 202, 212, 213) fonctionnent dans leur plage de volume optimale concernant la valeur de distorsion optimale ou l'efficacité optimale pour la valeur de volume de la commande de changement de volume (105, 205), et dans lequel les interfaces de diffusion (107, 108, 207, 208, 214, 215, 218) sont configurées pour diffuser les commandes de changement de volume adaptées (220) aux dispositifs électroniques uniques (101, 102, 201, 202, 212, 213), et
une unité de commande de volume (109, 110, 209, 210) dans chacun des dispositifs électroniques couplés (101, 102, 201, 202, 212, 213) configurée pour adapter le volume du dispositif électronique respectif (101, 102, 201, 202, 212, 213) selon la commande de changement de volume adaptée reçue (105, 205) en adaptant le réglage de volume interne du dispositif électronique couplé respectif (101, 102, 201, 202, 212, 213).

8. Système de commande (100, 200) selon la revendication 7, dans lequel l'un des récepteurs (103, 104, 203, 204, 217) est prévu dans un premier des dispositifs électroniques (101, 102, 201, 202, 212, 213) et est configuré pour recevoir la commande de changement de volume (105, 205) directement d'une télécommande (106, 206) du premier dispositif électronique (101, 102, 201, 202, 212, 213) et dans lequel une des interfaces de diffusion (107, 108, 207, 208, 214, 215, 218) est fournie dans le premier dispositif électronique (101, 102, 201, 202, 212, 213) et est configurée pour diffuser la commande de changement de volume respective (105, 205) aux autres dispositifs électroniques (101, 102, 201, 202, 212, 213).

9. Système de commande (100, 200) selon la revendication 7, comprenant un serveur central (216), dans lequel un des récepteurs (103, 104, 203, 204, 217) et une des interfaces de diffusion (107, 108, 207, 208, 214, 215, 218) sont prévus dans un serveur central (216) et dans lequel le récepteur (103, 104, 203, 204, 217) dans le serveur central (216) est configuré pour recevoir la commande de changement de volume (105, 205) et l'interface de diffusion (107, 108, 207, 208, 214, 215, 218) dans le serveur central (216) est configurée pour diffuser la commande de changement de volume (105, 205) aux dispositifs électroniques (101, 102, 201, 202, 212, 213).

10. Système de commande (100, 200) selon l'une quelconque des revendications précédentes 7 à 9, dans lequel les interfaces de diffusion (107, 108, 207, 208, 214, 215, 218) sont configurées pour fournir et/ou recevoir un signal analogique et/ou un signal numérique et/ou un signal PWM.

11. Système de commande (100, 200) selon l'une quelconque des revendications précédentes 7 à 10, dans lequel les interfaces de diffusion (107, 108, 207, 208, 214, 215, 218) comprennent une interface de signal filaire et/ou une interface de communication sans fil et/ou une interface de communication optique.

12. Système de commande (100, 200) selon l'une quelconque des revendications précédentes 7 à 11, dans lequel lorsqu'une commande de changement de dispositif est reçue au niveau de l'un des dispositifs électroniques (101, 102, 201, 202, 212, 213) qui est connecté à une pluralité de dispositifs électroniques (101, 102, 201, 202, 212, 213), l'interface de diffusion (107, 108, 207, 208, 214, 215, 218) du dispositif électronique respectif (101, 102, 201, 202, 212, 213) est configurée pour fournir automatiquement au dispositif électronique nouvellement sélectionné (101, 102, 201, 202, 212, 213) indiqué par la commande de changement de dispositif une commande de changement de volume (105, 205) selon la dernière commande de changement de volume reçue (105, 205).
